# EUROPÄISCHE PATENTANMELDUNG

(11) **EP 3 287 687 A1**
(43) Veröffentlichungstag der Anmeldung: **28.02.2018**
(21) Anmeldenummer: 16001850.3
(22) Anmeldetag: 23.08.2016
(51) Int. Cl.: F17C 3/04, F17C 13/00, F17C 13/02

(54) **TRANSPORTBEHÄLTER SOWIE VERFAHREN ZUM WIEGEN EINES DERARTIGEN TRANSPORTBEHÄLTERS**

(71) Anmelder: Linde Aktiengesellschaft, 80331 München (DE)
(72) Erfinder: Guzmann, Marcus, 82541 Münsing (DE)
(74) Vertreter: Meilinger, Claudia Sabine

(57) **Zusammenfassung**

Ein Transportbehälter (1) für Helium (He), mit einem Innenbehälter (6) zum Aufnehmen des Heliums (He), einem Außenbehälter (2), in dem der Innenbehälter (6) aufgenommen ist, und einer zwischen dem Innenbehälter (6) und dem Außenbehälter (2) vorgesehenen Isoliereinrichtung (13) zum thermischen Isolieren des Innenbehälters (6), wobei eine dem Innenbehälter (6) abgewandte Außenseite (26) des Außenbehälters (2) zumindest teilweise mit einer superhydrophoben Beschichtung (27) versehen ist.

## Beschreibung

Die vorliegende Erfindung betrifft einen Transportbehälter für Helium sowie ein Verfahren zum Wiegen eines derartigen Transportbehälters.

Helium wird zusammen mit Erdgas gefördert. Ein Transport großer Mengen Helium ist aus ökonomischen Gründen nur in flüssiger beziehungsweise überkritischer Form, das heißt, bei einer Temperatur von etwa 4,2 bis 6 K und unter einem Druck von 1 bis 6 bar sinnvoll. Zum Transport des flüssigen beziehungsweise überkritischen Heliums werden Transportbehälter eingesetzt, die, um einen zu schnellen Druckanstieg des Heliums zu vermeiden, aufwändig thermisch isoliert werden. Derartige Transportbehälter können beispielsweise mit Hilfe von flüssigem Stickstoff gekühlt werden. Hierbei wird ein mit dem flüssigen Stickstoff gekühlter thermischer Schild vorgesehen. Der thermische Schild schirmt einen Innenbehälter des Transportbehälters ab. In dem Innenbehälter ist das flüssige beziehungsweise tiefkalte Helium aufgenommen. Die Haltezeit für das flüssige beziehungsweise tiefkalte Helium beträgt bei derartigen Transportbehältern 35 bis 40 Tage, das heißt, nach dieser Zeit ist der Druck im Innenbehälter auf den Maximalwert von 6 bar gestiegen. Der Vorrat an flüssigem Stickstoff reicht für etwa 35 Tage aus. Wird der Maximaldruck des Behälters überschritten, öffnet sich automatisch ein Sicherheitsventil am Transportbehälter, das zu einem Druckablass und damit Verlust des Heliums führt. Weiterhin heizt sich der Transportbehälter bei Überschreitung der Haltezeit auf und erfordert eine spezielle und kostenintensive Herunterkühlung. Dieses Herunterkühlen kann mehrere Tage in Anspruch nehmen und reduziert hierdurch die Verfügbarkeit und die Effizienz derartiger Transportbehälter.

Weiterhin müssen die Transportbehälter jedes Mal bevor sie gewogen werden, das heißt, bevor sie mit Helium befüllt werden, nach dem Transport, nach einer Lagerung und beim Ankommen beim Kunden gewogen werden. Hierzu wird ein Stickstofftank des Transportbehälters mit flüssigem Stickstoff bis auf ein Maximallevel gefüllt. Das Gewicht des eingefüllten Heliums wird basierend auf dem aktuellen Gesamtgewicht des Transportbehälters und des Heliums sowie eines Taragewichts des Transportbehälters ermittelt. Um das Gewicht des Heliums exakt zu ermitteln, ist es erforderlich, den Transportbehälter außenseitig zu reinigen. Normalerweise sind derartige Transportbehälter außenseitig mit einer weißen Beschichtung versehen. Mit Hilfe der Beschichtung kann die durch das Sonnenlicht eingebrachte Wärmeenergie reduziert und hierdurch ein Aufwärmen des Transportbehälters verhindert werden. Die weiße Beschichtung reduziert die Absorption von Sonnenlicht, insbesondere von UV-Licht, durch Reflexion.

Die DE 20 2013 006 851 U1 beschreibt eine kryogene Anlage mit zumindest einer Anlagenkomponente mit einer Komponentenoberfläche, auf der eine Beschichtung aufgetragen ist, wobei die Beschichtung eines der folgenden Merkmale a) bis g) oder eine Kombination zumindest zweier der folgenden Merkmale a) bis g), die jeweils technisch miteinander kompatibel sind, aufweist: a) einen solaren Gesamtreflexionsgrad und einen thermischen Emissionsgrad von jeweils mehr als 70%, b) wenigstens ein farbiges Pigment mit einer Transmissivität im nahen infraroten Wellenlängenbereich von mehr als 70%, c) wenigstens ein farbiges Pigment mit einer Reflektivität im nahen infraroten Wellenlängenbereich von mehr als 30%, d) wenigstens ein Spezialeffektpigment, e) wenigstens ein photokatalytisch wirksames Pigment, f) eine hochglänzende Abschlussschicht, g) eine superhydrophobe Abschlussschicht.

Vor diesem Hintergrund besteht die Aufgabe der vorliegenden Erfindung darin, einen verbesserten Transportbehälter zur Verfügung zu stellen.

Demgemäß wird ein Transportbehälter für Helium vorgeschlagen. Der Transportbehälter umfasst einen Innenbehälter zum Aufnehmen des Heliums, einen Außenbehälter, in dem der Innenbehälter aufgenommen ist, und eine zwischen dem Innenbehälter und dem Außenbehälter vorgesehene Isoliereinrichtung zum thermischen Isolieren des Innenbehälters, wobei eine dem Innenbehälter abgewandte Außenseite des Außenbehälters zumindest teilweise mit einer superhydrophoben Beschichtung versehen ist.

Mit Hilfe der Beschichtung kann erreicht werden, dass bei einer Beaufschlagung des Transportbehälters mit Wasser oder mit einer wässrigen Lösung zum Reinigen desselben das Wasser mitsamt den Schmutzpartikeln von der Außenfläche abperlt, wodurch auf der Außenseite anhaftende Schmutzpartikel mitgerissen werden. Weiterhin kann auf der Außenseite anhaftendes Eis und/oder Schnee mit Hilfe von warmem Wasser oder Dampf aufgeschmolzen werden, wobei nach dem Aufschmelzen das Wasser sofort kugelförmige Tropfen bildet, die auf der Außenseite ablaufen, ohne dass die Außenseite erneut vereist. Hierdurch kann der Wärmeeintrag in den Transportbehälter reduziert werden. Dies führt zum einen dazu, dass ein aufwändiges Herunterkühlen des Transportbehälters verzichtbar ist, dass der Verlust an Helium aufgrund einer Erwärmung des Innenbehälters verhindert wird und dass der Bedarf an flüssigem Stickstoff für die Isoliereinrichtung reduziert wird. Die Haltezeit für das Helium und damit die Transportzeit des Transportbehälters wird verlängert sowie dessen Auslastung gesteigert. Weiterhin kann dadurch, dass das Wasser sofort von der Außenseite abperlt und nicht wieder an dieser anfriert, der Bedarf an warmem Wasser, Dampf und/oder Frostschutzmitteln reduziert werden. Dies reduziert die Betriebskosten für den Transportbehälter.

Der Innenbehälter kann auch als Heliumbehälter oder Innentank bezeichnet werden. Der Transportbehälter kann auch als Helium-Transportbehälter, Helium-Container, Container oder kryogener Behälter bezeichnet werden. Das Helium kann als flüssiges oder tiefkaltes Helium bezeichnet werden. Das Helium ist insbesondere eine kryogene Flüssigkeit. Der Transportbehälter ist insbesondere dazu eingerichtet, das Helium in tiefkalter oder flüssiger beziehungsweise in überkritischer Form zu transportieren. In der Thermodynamik ist der kritische Punkt ein thermodynamischer Zustand eines Stoffes, der sich durch Angleichen der Dichten von flüssiger und Gasphase kennzeichnet. Die Unterschiede zwischen beiden Aggregatszuständen hören an diesem Punkt auf zu existieren. In einem Phasendiagramm stellt der Punkt das obere Ende der Dampfdruckkurve dar. Das Helium wird in flüssiger beziehungsweise tiefkalter Form in den Innenbehälter eingefüllt. In dem Innenbehälter bilden sich dann eine Flüssigkeitszone mit flüssigem Helium und eine Gaszone mit gasförmigem Helium. Das Helium weist also nach dem Einfüllen in den Innenbehälter zwei Phasen mit unterschiedlichen Aggregatszuständen, nämlich flüssig und gasförmig, auf. Das heißt, in dem Innenbehälter befindet sich eine Phasengrenze zwischen dem flüssigen Helium und dem gasförmigen Helium. Nach einer gewissen Zeit, das heißt, wenn der Druck in dem Innenbehälter steigt, wird das sich in dem Innenbehälter befindende Helium einphasig. Die Phasengrenze existiert dann nicht mehr und das Helium ist überkritisch.

Insbesondere erzeugt die Beschichtung einen Lotuseffekt. Als Lotuseffekt wird die geringe Benetzbarkeit einer Oberfläche bezeichnet, wie sie bei der Lotuspflanze beobachtet werden kann. Wasser perlt in Tropfen ab und benetzt die Oberfläche nicht. Das Abperlen des Wassers nimmt dabei auch alle Schmutzpartikel auf der Oberfläche mit. Verantwortlich dafür ist eine komplexe mikro- und nanoskopische Architektur der Oberfläche, die die Haftung von Schmutzpartikeln minimiert. Der Begriff "hydrophob" bedeutet wörtlich "wassermeidend". Die Hydrophobie ist die Assoziation unpolarer Gruppen oder Moleküle, beispielsweise Wasser, in einer wässrigen Umgebung. Mit Hydrophobie werden Substanzen charakterisiert, die sich nicht mit Wasser mischen und es auf Oberflächen abperlen lassen. Wenn eine Oberfläche sehr stark wasserabweisend ist, spricht man auch von Superhydrophobie. Vorzugsweise ist die Außenseite vollständig mit der Beschichtung versehen.

Gemäß einer Ausführungsform ist der Kontaktwinkel, den ein auf der Beschichtung platzierter Wassertropfen zu einer Oberfläche der Beschichtung bildet, größer als 130°, bevorzugt größer als 140°, weiter bevorzugt größer als 150°, weiter bevorzugt größer als 160°.

Der Kontaktwinkel kann auch als Rand- oder Benetzungswinkel bezeichnet werden. Der Kontaktwinkel ist der Winkel, den der Wassertropfen auf der Oberfläche der Beschichtung zu dieser Oberfläche hin bildet. Die Größe des Kontaktwinkels zwischen einer Flüssigkeit, insbesondere Wasser, und der Beschichtung hängt von der Wechselwirkung zwischen den Stoffen an der Berührungsfläche ab. Je geringer diese Wechselwirkung ist, desto größer wird der Kontaktwinkel. Je größer die Wechselwirkung ist, desto kleiner wird der Kontaktwinkel. Bevorzugt ist der Kontaktwinkel ≥ 160°.

Gemäß einer Ausführungsform weist eine Oberfläche der Beschichtung eine Nanostruktur auf.

Als Nanostrukturen werden Strukturen bis zu einer Strukturgröße von 100 nm bezeichnet. Diese Größenordnung bezeichnet einen Grenzbereich, in dem die Oberflächeneigenschaften gegenüber den Volumeneigenschaften der Materialien eine immer größere Rolle spielen und zunehmend quantenphysikalische Effekte berücksichtigt werden müssen. Man spricht hier auf von größeninduzierten Funktionalitäten.

Gemäß einer weiteren Ausführungsform weist die Isoliereinrichtung einen stickstoffgekühlten Schild, der zwischen dem Innenbehälter und dem Außenbehälter angeordnet ist, und einen Stickstoffbehälter zur Aufnahme von flüssigem Stickstoff auf.

Der Schild kann als thermischer Schild bezeichnet werden. Der Schild ist insbesondere aktiv gekühlt. Unter "aktiv gekühlt" ist vorliegend zu verstehen, dass der Schild mit flüssigem Stickstoff beaufschlagt wird, um diesen zu kühlen.

Weiterhin wird ein Verfahren zum Wiegen eines derartigen Transportbehälters für Helium vorgeschlagen. Der Transportbehälter weist dabei einen Innenbehälter zum Aufnehmen des Heliums, einen Außenbehälter, in dem der Innenbehälter aufgenommen ist, und eine zwischen dem Innenbehälter und dem Außenbehälter vorgesehen Isoliereinrichtung zum thermischen Isolieren des Innenbehälters auf, wobei eine dem Innenbehälter abgewandte Außenseite des Außenbehälters zumindest teilweise mit einer superhydrophoben Beschichtung beschichtet ist. Das Verfahren umfasst die folgenden Schritte: Reinigen der Außenseite des Außenbehälters mit Hilfe von Wasser oder einer wässrigen Lösung, wobei aufgrund der Beschichtung das Wasser oder die wässrige Lösung von der Außenseite abperlt, Befüllen eines Stickstoffbehälters des Transportbehälters mit flüssigem Stickstoff, Wiegen des Transportbehälters und Ermitteln einer in dem Transportbehälter enthaltenen Menge an Helium.

Insbesondere werden bei dem Reinigen der Außenseite des Außenbehälters auf dieser abgelagerte Schmutzpartikel mit Hilfe des abperlenden Wassers von der Außenseite fortgerissen. Insbesondere wird der Stickstoffbehälter bis zu einem maximal möglichen Füllstand befüllt. Vorzugsweise wird ein Taragewicht des Transportbehälters ermittelt. Das Taragewicht wird bei maximalem Füllstand an flüssigem Stickstoff ermittelt. Unter Taragewicht ist die Differenz zwischen dem Bruttogewicht des Transportbehälters inklusive flüssigem Stickstoff bei maximalem Füllstand und dem Reingewicht des Wägegutes, insbesondere des Heliums, zu verstehen. Das Gesamtgewicht des vollständig befüllten Transportbehälters minus das Taragewicht ergibt dann das Gewicht des beinhaltenden Heliums.

Wird der Transportbehälter beim Kunden angeliefert, können insbesondere die folgenden Prozessschritte durchgeführt werden: Ankunft des Transportbehälters, Reinigung des Transportbehälters, Auffüllen des Stickstoffbehälters mit flüssigem Stickstoff, Wiegen des Transportbehälter inklusive des flüssigen Stickstoffs, Bestimmung der Helium-Liefermenge und Verwendung des Heliums beim Kunden.

Beim Abtransport vom Kunden können insbesondere die folgenden Prozessschritte durchgeführt werden: Reinigung des Transportbehälters, Auffüllen des Stickstoffbehälters mit flüssigem Stickstoff, Wiegen des Transportbehälters inklusive des Stickstoffs, Bestimmung der Helium-Restmenge und Transport zum Lieferanten.

Bei der Ankunft am Befüllort können insbesondere die folgenden Prozessschritte durchgeführt werden: Ankunft des Transportbehälters, Reinigung des Transportbehälters, Auffüllen des Stickstoffbehälters mit flüssigem Stickstoff, Wiegen des Transportbehälters inklusive des Stickstoffs, Bestimmung der Helium-Restmenge, gegebenenfalls Zwischenlagerung, gegebenenfalls Reinigung des Transportbehälters, Befüllung mit Helium, Auffüllen des Stickstoffbehälters mit flüssigem Stickstoff, Wiegen des Transportbehälters, Bestimmung der Helium-Abfüllmenge/Füllstand und Transport zum Distributionshub oder Kunden.

Am Distributionhub können insbesondere die folgenden Prozessschritte durchgeführt werden: Ankunft des Transportbehälters, Reinigung des Transportbehälters, Auffüllen des Stickstoffbehälters mit flüssigem Stickstoff, Wiegen des Transportbehälters, Bestimmung des Helium-Füllstands, gegebenenfalls Auffüllen mit Helium, gegebenenfalls Auffüllen mit flüssigem Stickstoff, Wiegen des Transportbehälters, Bestimmung der Helium-Abfüllmenge/Füllstand und Weitertransport.

Gemäß einer Ausführungsform wird nach dem Ermitteln der in dem Transportbehälter enthaltenen Menge an Helium, der Transportbehälter mit Helium befüllt.

Gemäß einer weiteren Ausführungsform wird nach dem Befüllen des Transportbehälters mit Helium der Transportbehälter erneut gewogen.

Gemäß einer weiteren Ausführungsform wird nach dem erneuten Wiegen des Transportbehälters eine in dem Transportbehälter enthaltene Menge an Helium erneut ermittelt.

Gemäß einer Ausführungsform wird bei dem Reinigen der Außenseite des Außenbehälters die Außenseite mit Hilfe von Dampf oder heißem Wasser enteist, wobei mit Hilfe der Beschichtung ein erneutes Vereisen durch das Abperlen des Wassers verhindert wird.

Hierzu können zusätzlich oder alternativ auch Frostschutzmittel zum Einsatz kommen. Da das Wasser in Form von Wassertropfen sofort von der Oberfläche der Beschichtung abperlt, kann dieses nicht erneut auf der Oberfläche anfrieren. Auch das zum Reinigen verwendete Wasser oder die wässrige Lösung und/oder Frostschutzmittel beziehungsweise Reinigungsmittel friert nicht auf der Oberfläche an. Hierdurch kann der Wärmeeintrag beim Reinigen der Außenseite in den Transportbehälter reduziert werden. Hierdurch wird eine Erwärmung des Transportbehälters verhindert. Weiterhin wird der Reinigungsaufwand reduziert, wodurch Kosten eingespart werden können.

Gemäß einer weiteren Ausführungsform werden auf der Außenseite anhaftende Schmutzpartikel von dem abperlenden Wasser mitgerissen.

Hierdurch kann auch eine Reinigung der Außenseite von Schmutzpartikeln erreicht werden, wodurch das Wiegeergebnis nicht verfälscht wird.

Weitere mögliche Implementierungen des Transportbehälters und/oder des Verfahrens umfassen auch nicht explizit genannte Kombinationen von zuvor oder im Folgenden bezüglich der Ausführungsbeispiele beschriebenen Merkmale oder Ausführungsformen. Dabei wird der Fachmann auch einzelne Aspekte als Verbesserung oder Ergänzung zu der jeweiligen Grundform des Transportbehälters und/oder des Verfahrens hinzufügen.

Weitere vorteilhafte Ausgestaltungen des Transportbehälters und/oder des Verfahrens sind Gegenstand der Unteransprüche sowie der im Folgenden beschriebenen Ausführungsbeispiele des Transportbehälters und/oder des Verfahrens. Im Weiteren werden der Transportbehälter und/oder das Verfahren anhand von bevorzugten Ausführungsformen unter Bezugnahme auf die beigelegten Figuren näher erläutert.
Fig. 1 zeigt eine schematische Schnittansicht einer Ausführungsform eines Transportbehälters;
Fig. 2 zeigt die Detailansicht II gemäß Fig. 1; und
Fig. 3 zeigt ein schematisches Blockdiagramm einer Ausführungsform eines Verfahrens zum Wiegen des Transportbehälters gemäß Fig. 1.

In den Figuren sind gleiche oder funktionsgleiche Elemente mit denselben Bezugszeichen versehen worden, sofern nichts anderes angegeben ist.

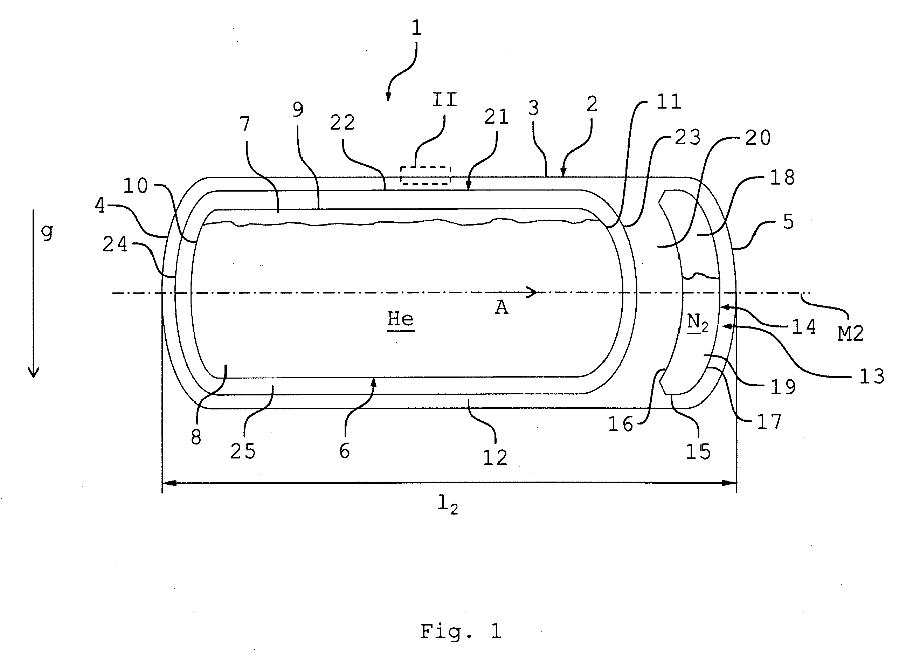

Die Fig. 1 zeigt eine stark vereinfachte schematische Schnittansicht einer Ausführungsform eines Transportbehälters 1 für flüssiges Helium He. Der Transportbehälter 1 kann auch als Helium-Transportbehälter bezeichnet werden. Der Transportbehälter 1 kann auch für andere kryogene Flüssigkeiten eingesetzt werden. Beispiel für kryogene Flüssigkeiten, oder kurz Kryogene, sind das zuvor erwähnte flüssige Helium He (Siedepunkt 1 bara: 4,222 K = -268,928 °C), flüssiger Wasserstoff H₂ (Siedepunkt 1 bara: 2,268 K = -252,882 °C), flüssiger Stickstoff N₂ (Siedepunkt 1 bara: 7,35 K = -195,80 °C) oder flüssiger Sauerstoff O₂ (Siedepunkt 1 bara: 9,18 K = - 182,97 °C).

Der Transportbehälter 1 umfasst einen Außenbehälter 2. Der Außenbehälter 2 ist beispielsweise aus Edelstahl gefertigt. Der Außenbehälter 2 kann eine Länge I₂ von beispielsweise 10 m aufweisen. Der Außenbehälter 2 umfasst einen rohr- oder zylinderförmigen Basisabschnitt 3, der stirnseitig beidseits jeweils mit Hilfe eines Deckelabschnitts 4, 5, insbesondere mit Hilfe eines ersten Deckelabschnitts 4 und eines zweiten Deckelabschnitts 5, verschlossen ist. Der Basisabschnitt 3 kann im Querschnitt eine kreisrunde oder annähernd kreisrunde Geometrie aufweisen. Die Deckelabschnitte 4, 5 sind gewölbt. Die Deckelabschnitte 4,5 sind gegensinnig gewölbt, so dass beide Deckelabschnitte 4, 5 bezüglich des Basisabschnitts 3 nach außen gewölbt sind. Der Außenbehälter 2 ist fluiddicht, insbesondere gasdicht. Der Außenbehälter 2 weist eine Symmetrie- oder Mittelachse M2 auf, zu der der Außenbehälter 2 rotationssymmetrisch aufgebaut ist.

Der Transportbehälter 1 umfasst weiterhin einen Innenbehälter 6 zum Aufnehmen des flüssigen Heliums He. Der Innenbehälter 6 ist beispielsweise ebenfalls aus Edelstahl gefertigt. In dem Innenbehälter 6 können, solange sich das Helium He im Zweiphasengebiet befindet, eine Gaszone 7 mit verdampftem Helium He und eine Flüssigkeitszone 8 mit flüssigem Helium He vorgesehen sein. Bezüglich einer Schwerkraftrichtung g ist die Gaszone 7 oberhalb der Flüssigkeitszone 8 angeordnet. Der Innenbehälter 6 ist fluiddicht, insbesondere gasdicht, und kann ein Abblasventil zum gesteuerten Druckabbau umfassen. Der Innenbehälter 6 umfasst wie der Außenbehälter 2 einen rohr- oder zylinderförmigen Basisabschnitt 9, der beidseitig stirnseitig von Deckelabschnitten 10, 11, insbesondere von einem ersten Deckelabschnitt 10 und einem zweiten Deckelabschnitt 11, verschlossen ist. Der Basisabschnitt 9 kann im Querschnitt eine kreisrunde oder annähernd kreisrunde Geometrie aufweisen.

Der Innenbehälter 6 ist, wie der Außenbehälter 2, rotationssymmetrisch zu der Mittelachse M2 ausgebildet. Ein zwischen dem Innenbehälter 6 und dem Außenbehälter 2 vorgesehener Zwischenraum 12 ist evakuiert. Der Transportbehälter 1 umfasst weiterhin eine Isoliereinrichtung 13, die zumindest abschnittsweise zwischen dem Innenbehälter 6 und dem Außenbehälter 2 angeordnet ist. Die Isoliereinrichtung 13 ist dazu eingerichtet, den Innenbehälter 6 thermisch zu isolieren und/oder zu kühlen. Die Isoliereinrichtung 13 umfasst einen Stickstoffbehälter 14. In dem Stickstoffbehälter 14 ist flüssiger Stickstoff N₂ aufgenommen. Der Stickstoffbehälter 14 umfasst einen rohr- oder zylinderförmigen Basisabschnitt 15, der rotationssymmetrisch zu der Mittelachse M2 aufgebaut sein kann. Der Basisabschnitt 15 kann im Querschnitt eine kreisrunde oder annähernd kreisrunde Geometrie aufweisen. Der Basisabschnitt 15 ist stirnseitig jeweils durch einen Deckelabschnitt 16, 17 verschlossen. Die Deckelabschnitte 16, 17 können gewölbt sein. Insbesondere sind die Deckelabschnitte 16, 17 in die gleiche Richtung gewölbt. Der Stickstoffbehälter 14 kann auch einen abweichenden Aufbau haben.

In dem Stickstoffbehälter 14 kann eine Gaszone 18 mit verdampftem Stickstoff N₂ und eine Flüssigkeitszone 19 mit flüssigem Stickstoff N₂ vorgesehen sein. In einer Axialrichtung A des Innenbehälters 6 ist der Stickstoffbehälter 14 neben dem Innenbehälter 6 angeordnet. Zwischen dem Innenbehälter 6, insbesondere dem Deckelabschnitt 11 des Innenbehälters 6, und dem Stickstoffbehälter 14, insbesondere dem Deckelabschnitt 16 des Stickstoffbehälters 14, ist ein Zwischenraum 20 vorgesehen, der Teil des Zwischenraums 12 sein kann. Das heißt, der Zwischenraum 20 ist ebenfalls evakuiert.

Der Transportbehälter 1 umfasst weiterhin einen der Isoliereinrichtung 13 zugeordneten thermischen Schild 21. Der thermische Schild 21 ist in dem zwischen dem Innenbehälter 6 und dem Außenbehälter 2 vorgesehenen evakuierten Zwischenraum 12 angeordnet. Der thermische Schild 21 ist mit Hilfe des flüssigen Stickstoffs N₂ aktiv kühlbar oder aktiv gekühlt. Unter einer aktiven Kühlung ist vorliegend zu verstehen, dass der flüssige Stickstoff N₂ zur Kühlung des thermischen Schilds 21 durch diesen hindurchgeleitet oder an diesem entlanggeleitet wird. Der thermische Schild 21 wird hierbei auf eine Temperatur abgekühlt, die etwa dem Siedepunkt des Stickstoffs N₂ entspricht.

Der thermische Schild 21 umfasst einen zylinder- oder rohrförmigen Basisabschnitt 22, der beidseitig von einem diesen stirnseitig abschließenden Deckelabschnitt 23, 24 abgeschlossen ist. Der Basisabschnitt 22 kann im Querschnitt eine kreisrunde oder annähernd kreisrunde Geometrie aufweisen. Der thermische Schild 21 ist vorzugsweise ebenfalls rotationssymmetrisch zu der Mittelachse M2 aufgebaut.

Ein erster Deckelabschnitt 23 des thermischen Schilds 21 ist zwischen dem Innenbehälter 6, insbesondere dem Deckelabschnitt 11 des Innenbehälters 6, und dem Stickstoffbehälter 14, insbesondere dem Deckelabschnitt 16 des Stickstoffbehälters 14, angeordnet. Ein zweiter Deckelabschnitt 24 des thermischen Schilds ist dem Stickstoffbehälter 14 abgewandt. Der thermische Schild 21 ist fluiddurchlässig. Das heißt, ein Zwischenraum 25 zwischen dem Innenbehälter 6 und dem thermischen Schild 21 ist in Fluidverbindung mit dem Zwischenraum 12. Hierdurch können die Zwischenräume 12, 25 gleichzeitig evakuiert werden. In dem thermischen Schild 21 können Bohrungen, Durchbrüche oder dergleichen vorgesehen sein, um ein Evakuieren der Zwischenräume 12, 25 zu ermöglichen. Der thermische Schild 21 ist vorzugsweise aus einem hochreinen Aluminiumwerkstoff gefertigt.

Der erste Deckelabschnitt 23 des thermischen Schilds 21 schirmt den Stickstoffbehälter 14 gegenüber dem Innenbehälter 6 ab. Das heißt, mit Blickrichtung von dem Innenbehälter 6 auf den Stickstoffbehälter 14 ist der Stickstoffbehälter 14 vollständig von dem ersten Deckelabschnitt 23 des thermischen Schilds 21 abgedeckt. Insbesondere umschließt der thermische Schild 21 den Innenbehälter 6 vollständig. Das heißt, der Innenbehälter 6 ist vollständig innerhalb des thermischen Schilds 21 angeordnet, wobei der thermische Schild 21, wie zuvor schon erwähnt, nicht fluiddicht ist.

Der thermische Schild 21 umfasst zum aktiven Kühlen desselben zumindest eine, bevorzugt jedoch mehrere Kühlleitungen. Die Kühlleitung oder die Kühlleitungen sind in Fluidverbindung mit dem Stickstoffbehälter 14, so dass der flüssige Stickstoff N₂ von dem Stickstoffbehälter 14 in die Kühlleitung oder in die Kühlleitungen strömen kann. Die Isoliereinrichtung 13 kann weiterhin einen in der Fig. 1 nicht gezeigten Phasenseparator umfassen, der dazu eingerichtet ist, gasförmigen Stickstoff N₂ von flüssigem Stickstoff N₂ zu trennen. Über den Phasenseparator kann der gasförmige Stickstoff N₂ aus der Isoliereinrichtung 13 abgeblasen werden.

Die Isoliereinrichtung 13 kann ferner, in der Fig. 1 nicht gezeigte, passive Isolierelemente umfassen. Beispielsweise kann zwischen dem thermischen Schild 21 und dem Außenbehälter 2 eine mehrlagige Isolationsschicht, insbesondere eine sogenannte MLI (multilayer insulation), angeordnet sein, die den Zwischenraum 12 völlig ausfüllt und somit den thermischen Schild 21 außenseitig und den Außenbehälter 2 innenseitig kontaktiert. Lagen aus Aluminiumfolie und Glaspapier, Glasseide oder Glasgittergewebe der Isolationsschicht können hierbei flauschig in den Zwischenraum 12 eingebracht sein. "Flauschig" heißt hierbei, dass die Lagen aus Aluminiumfolie und Glaspapier, Glasseide oder Glasgittergewebe nicht gepresst sind, so dass durch die Prägung und Perforierung der Aluminiumfolie die Isolationsschicht und damit der Zwischenraum 12 störungsfrei evakuiert werden kann.

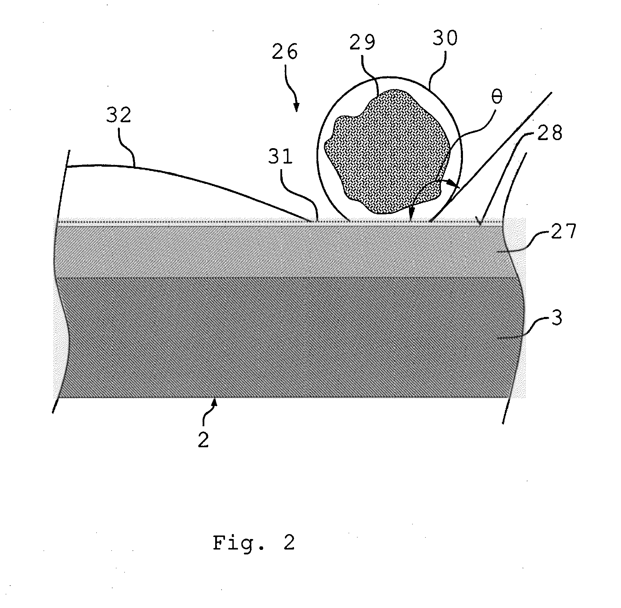

Wie die Fig. 2 zeigt, ist an einer dem Innenbehälter 6 abgewandten Außenseite 26 des Außenbehälters 2 eine superhydrophobe Beschichtung 27 vorgesehen. Hydrophob bedeutet "wassermeidend". Mit diesem Begriff werden Substanzen charakterisiert, die sich nicht mit Wasser mischen und es auf ihrer Oberfläche abperlen lassen. Bei einer stark wasserabweisenden Oberfläche wird auch von Superhydrophobie gesprochen.

Insbesondere weist die Beschichtung 27 einen sogenannten Lotuseffekt auf. Mit Lotuseffekt wird die geringe Benetzbarkeit einer Oberfläche bezeichnet, wie sie auch bei der Lotuspflanze beobachtet werden kann.

Auf einer Oberfläche 28 der Beschichtung 27 anhaftende Schmutzpartikel 29 werden von auf der Oberfläche 28 abperlenden Wassertropfen 30 mitgerissen. Hierdurch wird eine Reinigung der Oberfläche 28 beim Benetzen derselben mit Wasser erzielt. Anders als bei superhydrophilen Oberflächen, bei denen Schmutz von einem geschlossenen Wasserfilm angelöst wird, setzt die superhydrophobe Beschichtung 27 auf die Bildung von Wassertropfen 30, die auf der Oberfläche 28 abperlen. Zur Erzeugung des superhydrophoben Effekts weist die Oberfläche 28 eine Nanostruktur 31 auf.

Der auf der Oberfläche 28 der Beschichtung 27 platzierte Wassertropfen 30 bildet zu der Oberfläche 28 einen Rand-, Benutzungs- oder Kontaktwinkel θ, der größer als 130°, bevorzugt größer als 140°, weiter bevorzugt größer als 150°, weiter bevorzugt größer als 160° ist. Besonders bevorzugt ist der Kontaktwinkel θ größer als 160°. Hierdurch bilden sich auf der Oberfläche 28 annähernd kugelförmige Wassertropfen 30, die besonders gut von der Oberfläche 28 abperlen. Auf der Oberfläche 28 kann auch eine Schicht aus Eis und/oder Schnee 32 abgelagert sein. Beim Aufschmelzen der Schicht aus Eis und/oder Schnee 32, beispielsweise mit Hilfe von Dampf oder warmem Wasser, bildet das geschmolzene Wasser sofort kreisrunde Wassertropfen 30 und perlt von der Oberfläche 28 ab. Ein erneutes Anfrieren auf der Oberfläche 28 wird hierdurch zuverlässig verhindert.

Wird der Transportbehälter 1 beim Kunden angeliefert, können die folgenden Prozessschritte durchgeführt werden: Ankunft des Transportbehälters 1, Reinigung des Transportbehälters 1, Auffüllen des Stickstoffbehälters 14 mit flüssigem Stickstoff N₂, Wiegen des Transportbehälter 1 inklusive des flüssigen Stickstoffs N₂, Bestimmung der Helium-Liefermenge und Verwendung des Heliums He beim Kunden.

Beim Abtransport vom Kunden können die folgenden Prozessschritte durchgeführt werden: Reinigung des Transportbehälters 1, Auffüllen des Stickstoffbehälters 14 mit flüssigem Stickstoff N₂, Wiegen des Transportbehälters 1 inklusive des Stickstoffs N₂, Bestimmung der Helium-Restmenge und Transport zum Lieferanten.

Bei der Ankunft am Befüllort können die folgenden Prozessschritte durchgeführt werden: Ankunft des Transportbehälters 1, Reinigung des Transportbehälters 1, Auffüllen des Stickstoffbehälters 14 mit flüssigem Stickstoff N₂, Wiegen des Transportbehälters 1 inklusive des Stickstoffs N₂, Bestimmung der Helium-Restmenge, gegebenenfalls Zwischenlagerung, gegebenenfalls Reinigung des Transportbehälters 1, Befüllung mit Helium He, Auffüllen des Stickstoffbehälters 14 mit flüssigem Stickstoff N₂, Wiegen des Transportbehälters 1, Bestimmung der Helium-Abfüllmenge/Füllstand und Transport zum Distributionshub oder Kunden.

Am Distributionhub können die folgenden Prozessschritte durchgeführt werden: Ankunft des Transportbehälters 1, Reinigung des Transportbehälters 1, Auffüllen des Stickstoffbehälters 14 mit flüssigem Stickstoff N₂, Wiegen des Transportbehälters 1, Bestimmung des Helium-Füllstands, gegebenenfalls Auffüllen mit Helium He, gegebenenfalls Auffüllen mit flüssigem Stickstoff N₂, Wiegen des Transportbehälters 1, Bestimmung der Helium-Abfüllmenge/Füllstand und Weitertransport.

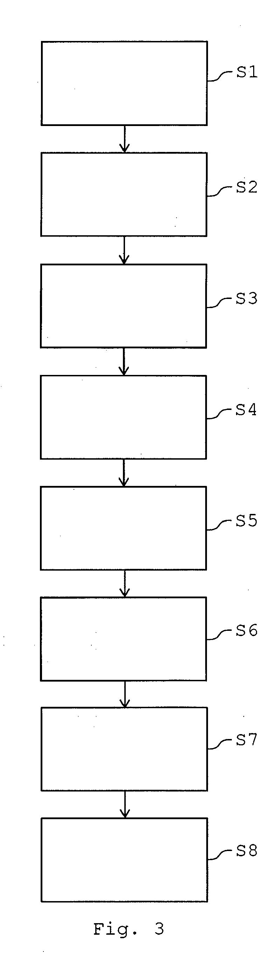

Die Fig. 3 zeigt ein schematisches Blockdiagramm eines Prozesses oder Verfahrens zum Wiegen eines derartigen Transportbehälters 1. In einem Schritt S1 wird die Außenseite 26 des Außenbehälters 6 mit Hilfe von Wasser oder einer wässrigen Lösung, insbesondere mit Hilfe von warmem Wasser oder Dampf beziehungsweise einer wässrigen Lösung oder Frostschutzmittel, gereinigt. Aufgrund der Beschichtung 27 perlt das Wasser oder die wässrige Lösung/Frostschutzmittel in Form von Wassertropfen 30 oder Frostschutzmitteltropfen von der Außenseite 26 ab.

In einem Schritt S2 wird in den Stickstoffbehälter 14 flüssiger Stickstoff N₂ bis zu einem maximalen Füllstand eingefüllt. Anschließend wird der Transportbehälter 1 in einem Schritt S3 gewogen. In einem Schritt S4 wird das Gewicht des Heliums He (Eingangsmenge) ermittelt. Optional wird beispielsweise nach einer Lagerung oder einem Transport des Transportbehälters 1 der Schritt S1 wiederholt. Nach der Bestimmung der Menge des enthaltenen Heliums He wird der Transportbehälter 1 in einem Schritt S5 mit Helium He befüllt.

In einem optionalen Schritt S6 wird in den Stickstoffbehälter 14 erneut flüssiger Stickstoff N₂ bis zu einem maximal möglichen Füllstand befüllt. Dieser Schritt S6 ist je nach der Befülldauer mit Helium He erforderlich oder nicht.

Nach dem Befüllen des Transportbehälters 1 mit Helium He in dem Schritt S5 sowie mit flüssigem Stickstoff N₂ in dem Schritt S6 wird der Transportbehälter 1 in einem Schritt S7 erneut gewogen. In einem Schritt S8 wird das Gewicht des eingefüllten Heliums He (Ausgangsmenge) ermittelt.

Vor jedem Wägevorgang, das heißt, vor den Schritten S3 und S7, kann der Stickstoffbehälter 14 der Isoliereinrichtung 13 erneut vollständig mit flüssigem Stickstoff N₂ befüllt werden. Vor dem Ermitteln des Gewichts des eingefüllten Heliums He kann ein sogenanntes Taragewicht des Transportbehälters 1 ermittelt werden. Das Taragewicht ist die Differenz zwischen dem Gesamtgewicht des Transportbehälters 1 inklusive dem Gewicht des flüssigen Stickstoffs N₂ bei maximalem Füllstand und dem Nettogewicht des Heliums He.

Im Falle von niedrigen Außentemperaturen unter 0 °C, insbesondere in Ländern wie Sibirien und Kanada, bei Temperaturen bis zu -40 °C, kann sich auf der Oberfläche 28 eine Schicht aus Eis und/oder Schnee 32 bilden. Um nun das Wiegeergebnis beim Wiegen des Transportbehälters 1 nicht zu verfälschen, ist es erforderlich, die Schicht aus Eis und/oder Schnee 32 sowie die Schmutzpartikel 29 vollständig zu entfernen. Hierzu wird die Schicht aus Eis und/oder Schnee 32 mit Hilfe von Dampf oder heißem Wasser aufgeschmolzen. Da die Beschichtung 27 vorgesehen ist, ist es nicht erforderlich, die Außenseite des Außenbehälters 2 über eine längere Zeit auf über 0 °C aufzuheizen, da die Wassertropfen 30 sofort von der Oberfläche abperlen. Die Wärmekapazität des Materials des Außenbehälters 2 führt somit nicht zu einem erneuten Vereisen der Außenseite 26. Hierdurch kann auf eine aufwändige Reinigung verzichtet werden. Weiterhin können bei dem Reinigen des Transportbehälters 1 Energie sowie Reinigungsmittel eingespart werden.

Es wird verhindert, dass eine verbleibende Schicht aus Eis und/oder Schnee 32 den Wiegeprozess negativ beeinflusst. Dadurch, dass auf eine Erwärmung des Außenbehälters 2 verzichtet werden kann, wird in den Transportbehälter 1 auch keine Wärme eingebracht. Hierdurch wird der Bedarf an flüssigem Stickstoff N₂ zum Herunterkühlen des Transportbehälters 1 geringer. Die Haltezeit für das Helium He, und damit auch die Transportzeit, wird verlängert. Ein Verlust an Helium He aufgrund eines wärmebedingten Druckaufbaus wird verhindert. Auf einen aufwändigen Herunterkühlprozess des erwärmten Transportbehälters 1 kann verzichtet werden. Zum Reinigen des Transportbehälters 1 kann auch ein Gemisch aus Wasser und einem Frostschutzmittel, wie Ethylen, Glycolpropylen, Glycol oder Glycerol, verwendet werden. Alternativ können unverdünnte Frostschutzmittel verwendet werden.

Obwohl die vorliegende Erfindung anhand von Ausführungsbeispielen beschrieben wurde, ist sie vielfältig modifizierbar.

### Verwendete Bezugszeichen

- 1: Transportbehälter
- 2: Außenbehälter
- 3: Basisabschnitt
- 4: Deckelabschnitt
- 5: Deckelabschnitt
- 6: Innenbehälter
- 7: Gaszone
- 8: Flüssigkeitszone
- 9: Basisabschnitt
- 10: Deckelabschnitt
- 11: Deckelabschnitt
- 12: Zwischenraum
- 13: Isoliereinrichtung
- 14: Stickstoffbehälter
- 15: Basisabschnitt
- 16: Deckelabschnitt
- 17: Deckelabschnitt
- 18: Gaszone
- 19: Flüssigkeitszone
- 20: Zwischenraum
- 21: Schild
- 22: Basisabschnitt
- 23: Deckelabschnitt
- 24: Deckelabschnitt
- 25: Zwischenraum
- 26: Außenseite
- 27: Beschichtung
- 28: Oberfläche
- 29: Schmutzpartikel
- 30: Wassertropfen
- 31: Nanostruktur
- 32: Eis/Schnee
- A: Axialrichtung
- g: Schwerkraftrichtung
- He: Helium
- I₂: Länge
- M2: Mittelachse
- N₂: Stickstoff
- S1: Schritt
- S2: Schritt
- S3: Schritt
- S4: Schritt
- S5: Schritt
- S6: Schritt
- S7: Schritt
- S8: Schritt
- θ: Kontaktwinkel

## Patentansprüche

1. Transportbehälter (1) für Helium (He), mit einem Innenbehälter (6) zum Aufnehmen des Heliums (He), einem Außenbehälter (2), in dem der Innenbehälter (6) aufgenommen ist, und einer zwischen dem Innenbehälter (6) und dem Außenbehälter (2) vorgesehenen Isoliereinrichtung (13) zum thermischen Isolieren des Innenbehälters (6), wobei eine dem Innenbehälter (6) abgewandte Außenseite (26) des Außenbehälters (2) zumindest teilweise mit einer superhydrophoben Beschichtung (27) versehen ist.

2. Transportbehälter nach Anspruch 1, wobei der Kontaktwinkel (θ) den ein auf der Beschichtung (27) platzierter Wassertropfen (30) zu einer Oberfläche (28) der Beschichtung (27) bildet größer als 130°, bevorzugt größer als 140°, weiter bevorzugt größer als 150°, weiter bevorzugt größer als 160°, ist.

3. Transportbehälter nach Anspruch 1 oder 2, wobei eine Oberfläche (28) der Beschichtung (27) eine Nanostruktur (31) aufweist.

4. Transportbehälter nach einem der Ansprüche 1 - 3, wobei die Isoliereinrichtung (13) einen stickstoffgekühlten Schild (21), der zwischen dem Innenbehälter (6) und dem Außenbehälter (2) angeordnet ist, und einen Stickstoffbehälter (14) zur Aufnahme von flüssigem Stickstoff (N₂) aufweist.

5. Verfahren zum Wiegen eines Transportbehälters (1) für Helium (He), welcher einen Innenbehälter (6) zum Aufnehmen des Heliums (He), einen Außenbehälter (2), in dem der Innenbehälter (6) aufgenommen ist, und eine zwischen dem Innenbehälter (6) und dem Außenbehälter (2) vorgesehenen Isoliereinrichtung (13) zum thermischen Isolieren des Innenbehälters (6) umfasst, wobei eine dem Innenbehälter (6) abgewandte Außenseite (26) des Außenbehälters (2) zumindest teilweise mit einer superhydrophoben Beschichtung (27) beschichtet ist, mit folgenden Schritten:
Reinigen (S1) der Außenseite (26) des Außenbehälters (6) mit Hilfe von Wasser oder einer wässrigen Lösung, wobei aufgrund der Beschichtung (27) das Wasser oder die wässrige Lösung von der Außenseite (26) abperlt,
Befüllen eines Stickstoffbehälters (14) des Transportbehälters (1) mit flüssigem Stickstoff (N₂),
Wiegen (S3) des Transportbehälters (1), und
Ermitteln (S4) einer in dem Transportbehälter (1) enthaltenen Menge an Helium (He).

6. Verfahren nach Anspruch 5, wobei nach dem Ermitteln (S4) der in dem Transportbehälter (1) enthaltenen Menge an Helium (He), der Transportbehälter (1) mit Helium (He) befüllt (S5) wird.

7. Verfahren nach Anspruch 6, wobei nach dem Befüllen (S5) des Transportbehälters (1) mit Helium (He) der Transportbehälter (1) erneut gewogen (S7) wird.

8. Verfahren nach Anspruch 7, wobei nach dem erneuten Wiegen (S7) des Transportbehälters (1) eine in dem Transportbehälter (1) enthaltene Menge an Helium (He) erneut ermittelt (S8) wird.

9. Verfahren nach einem der Ansprüche 5 - 8, wobei bei dem Reinigen der Außenseite (26) des Außenbehälters (2) die Außenseite (26) mit Hilfe von Dampf oder heißem Wasser enteist wird, und wobei mit Hilfe der Beschichtung (27) ein erneutes Vereisen durch das Abperlen des Wassers verhindert wird.

10. Verfahren nach einem der Ansprüche 5 - 9, wobei auf der Außenseite (26) anhaftende Schmutzpartikel (29) von dem abperlenden Wasser mitgerissen werden.
